# EUROPÄISCHE PATENTSCHRIFT

(11) **EP 1 079 307 B1**
(45) Veröffentlichungstag und Bekanntmachung des Hinweises auf die Patenterteilung: **01.10.2014**
(21) Anmeldenummer: 00202908.0
(22) Anmeldetag: 14.08.2000
(51) Int. Cl.: G06F 12/08

(54) **Verfahren zum Betrieb eines Speichersystems sowie Speichersystem**
Method for operating a memory system as well as memory system
Procédé de fonctionnement d'un système de mémoire ainsi que système de mémoire

(30) Priorität: 21.08.1999 DE 19939764
(43) Veröffentlichungstag der Anmeldung: 28.02.2001
(73) Patentinhaber: NXP B.V., 5656 AG Eindhoven (NL)
(72) Erfinder: Hertwig, Axel, 52064 Aachen (DE); Bauer, Harald, 52064 Aachen (DE); Fawer, Urs, 52064 Aachen (DE); Lippens, Paul, 52064 Aachen (DE)
(74) Vertreter: Long, Giorgio

(56) Entgegenhaltungen:
- "Prefetching using a pageable branch history table" IBM TECHNICAL DISCLOSURE BULLETIN., Bd. 28, Nr. 8, Januar 1986 (1986-01), Seiten 3510-3511, XP002152936 IBM CORP. NEW YORK., US ISSN: 0018-8689
- "Buffer block prefetching method" IBM TECHNICAL DISCLOSURE BULLETIN., Bd. 20, Nr. 2, Juli 1977 (1977-07), Seiten 696-697, XP002152937 IBM CORP. NEW YORK., US ISSN: 0018-8689
- "Confirmed prefetching with confirmation on exit" IBM TECHNICAL DISCLOSURE BULLETIN., Bd. 29, Nr. 2, Juli 1986 (1986-07), Seite 911 XP002152938 IBM CORP. NEW YORK., US ISSN: 0018-8689

## Beschreibung

Die Erfindung betrifft ein Verfahren zum Betrieb eines Speichersystems umfassend einen Hauptspeicher und einen diesem zugeordneten, in adressbezogene Zeilen strukturierten Cache-Speicher, in den Daten aus dem Hauptspeicher eingeladen und bei Bedarf von einem Prozessor ausgelesen werden können, wobei während des Zugriffs des Prozessors auf Daten einer bestimmten Adresse im Cache-Speicher, unter welcher bestimmte Daten aus dem Hauptspeicher einer korrespondierenden Adresse abgelegt sind, überprüft wird, ob unter der nächstfolgenden Adresse im Cache-Speicher sequentielle Daten abgelegt sind, wobei diese bei Nichtvorhandensein aus dem Hauptspeicher im Rahmen eines prefetch in den Cache-Speicher eingeladen werden können.

Bei bekannten Speichersystemen werden eine Vielzahl von im Hauptspeicher abgelegten Daten bereits vor ihrer Abfrage durch einen zugeordneten Prozessor, der ein entsprechendes Programm abarbeitet, in einen Cache-Speicher eingeladen. Ein Cache-Speicher ist ein schneller Pufferspeicher, aus welchem dem Prozessor die benötigten Daten wesentlich schneller als aus dem deutlich langsamer arbeitenden Hauptspeicher zur Verfügung stehen. Zur Sicherstellung, dass auch in den allermeisten Fällen die vom Prozessor benötigten Daten im Cache-Speicher vorhanden sind, hat sich der Einsatz von prefetch bewährt. Im Rahmen eines prefetch-Vorgangs werden Daten, die zwar im Moment noch nicht vom Prozessor benötigt werden, von denen es aber wahrscheinlich ist, dass sie aufgrund des Prozessorzugriffs im Cache-Speicher in Kürze benötigt werden, bereits vorher aus dem Hauptspeicher in den Cache-Speicher oder ein entsprechendes Register eingeladen, so dass sie dann, wenn der Prozessor diese Daten benötigt, dort auch vorhanden sind. Ein Cache-Speicher ist in eine Vielzahl von Zeilen, die zumeist auch in Spalten strukturiert sind, unterteilt, wobei jeder Speicherzeile eine bestimmte Adresszeile zugeordnet ist. In jeweils eine Zeile des Cache-Speichers wird eine Zeile des Hauptspeichers geschrieben, wobei die im Cache-Speicher angegebene Zeilenadresse mit der des Hauptspeichers korrespondiert. Jede Zeile hat also eine bestimmte Länge, über welche die Daten eingeschrieben sind. Die Arbeitsweise eines solchen Speichersystems ist nun derart, dass bei einem Treffer in der Cache-Zeile N, die die Daten der Adresse A enthält, gleichzeitig überprüft wird, ob sich in der Cache-Zeile N+1 die Daten der Adresse A + Zeilenlänge befinden. Es wird also bei einem Treffer in der Cache-Zeile N stets überprüft, ob in der nachfolgenden Zeile sequentielle Daten vorhanden sind, die der Prozessor voraussichtlich in Kürze benötigen wird. Ist dies nicht der Fall, werden die Daten der Adresse A + Zeilenlänge in einem prefetch-Vorgang entweder in den Cache-Speicher oder aber ein entsprechendes zugeordnetes Register geladen.

Grundsätzlich erhöht der Einsatz von prefetch für einen Cache-Speicher die Trefferrate, die im Cache-Speicher vom Prozessor erzielt wird. Eine hohe Trefferrate wiederum führt zu einer besseren Leistung des Systems, da der Speicherzugriff bei einem Treffer ohne Verzögerung durchgeführt werden kann, während ein Fehlschlag zu einem Zugriff auf den langsameren Hauptspeicher führt und das System bremst.

Durch den Einsatz von prefetch entstehen aber auch Nachteile. Zum einen werden Daten vom Hauptspeicher in den Cache-Speicher geladen, die eventuell überhaupt nicht benötigt werden, wobei diese Gefahr insbesondere bei großen Zeilenlängen besteht, da in diesem Fall sehr viele Daten im Rahmen eines prefetch-Vorganges in den Cache-Speicher übertragen werden. Da jeder Datentransfer zum Stromverbrauch beiträgt, steigt die Verlustleistung an. Zum anderen entsteht ein Konflikt, wenn bei einem laufenden prefetch-Vorgang ein Fehlschlag im Cache-Speicher entsteht, wenn der Prozessor also dort die gewünschten Daten nicht findet. Dann muss der prefetch-Vorgang entweder abgebrochen oder abgeschlossen werden bevor das Laden der benötigten Daren erfolgen kann. In beiden Fällen entstehen zusätzliche Verzögerungen, die die Leistungsfähigkeit des Systems verringern.

Das Dokument "Prefetching using a pageable branch history table" IBM TECHNICAL DISCLOSURE BULLETIN., XP002152936, beschreibt einen Cachezeilen-Prefetch mittels PBHT unter Aufteilung einer Cachezeile in Bereiche und Festlegung der zu verwendenden Folgezeile für jeden Bereich.

Das Dokument "Buffer block prefetching method" IBM TECHNICAL DISCLOSURE BULLETIN., XP002152937, beschreibt ein Prefetchverfahren für Prozessoren mit Hochgeschwindigkeitsbuffer (cache) wobei der Prefetch mit Hilfe eines besonderen Bit erfolgt, der mit jeder Blockposition im Cache assoziiert ist.

Das Dokument "Confirmed prefetching with confirmation on exit" IBM TECHNICAL DISCLOSURE BULLETIN XP002152938, beschreibt eine Prefetchdurchführung, wobei ein Prefetch nur dann zugelassen wird wenn der vorangegangene Prefetchversuch erfolgreich war.

Der Erfindung liegt damit das Problem zugrunde, ein Verfahren zum Betrieb eines Speichersystems anzugeben, welches bei Einsatz einer prefetch-Strategie die Leistungsfähigkeit des Systems verbessert und den Stromverbrauch verringert

Besondere und bevorzugte Aspekte der Erfindung sind in den beigefügten unabhängigen und abhängigen Ansprüchen dargelegt.

Zur Lösung dieses Problems ist bei einem Verfahren der eingangs genannten Art erfindungsgemäß vorgesehen, dass ein prefetch nur dann erfolgt, wenn der Prozessor auf einen innerhalb einer Zeile liegenden, vorbestimmten Zeilenabschnitt zugreift.

Beim erfindungsgemäßen Verfahren wird also vorteilhaft ein prefetch-Vorgang überhaupt nur dann initiiert, wenn der Prozessor innerhalb einer Zeile auf Daten, die in einem vorbestimmten Zeilenabschnitt liegen, zugreift. Nur in diesem Fall wird, wenn sich bei der Überprüfung betreffend das Vorhandensein der sequentiellen Daten ergibt, dass diese fehlen, ein prefetch durchgeführt. Dem liegt die Erkenntnis zugrunde, dass die Wahrscheinlichkeit, dass die Daten der sequentiell der bearbeiteten Zeile nachfolgenden Zeile vom Prozessor benötigt werden, um so größer ist, je weiter hinten in der Zeile N der Treffer liegt bzw. der Prozessor Daten ausliest. Denn dann ist anzunehmen, dass der Prozessor, der ein bestimmtes Programm abarbeitet, die Daten der Zeile N weiter ausliest und in Kürze die sequentiellen Daten der nachfolgenden Zeile N+1, wie sie im Hauptspeicher abgelegt ist, benötigen würde. Durch die Definition eines bestimmten Zeilenabschnitts, welche den Teil einer Zeile definiert, in den der Prozessor zugreifen muss, damit überhaupt die Möglichkeit eines prefetch-Vorgangs besteht, kann dem Rechnung getragen werden. Greift der Prozessor auf eine Adresse in der Zeile zu, die außerhalb des vorbestimmten Zeilenabschnitts liegt, kann ein prefetch (noch) nicht initiiert werden.

Hierdurch kann die Leistungsfähigkeit des Systems erhöht werden, da ein prefetch-Vorgang eben nur dann initiiert wird, wenn es sehr wahrscheinlich ist, dass die damit vom Hauptspeicher geholten Daten auch tatsächlich gebraucht werden. Ein prefetch wird also nicht zwingend jedes Mal bei Feststellen des Nichtvorhandenseins der sequentiellen Daten durchgeführt, sondern nur in bevorzugten Fällen. Damit sinkt die Anzahl der während eines Programmablaufs durchgeführten prefetch-Vorgänge, so dass hierdurch auch der Stromverbrauch, der durch das Laden von Daten in den Cache-Speicher oder das diesem zugehörende Register verursacht wird, deutlich sinkt. Gegenüber einer konventionellen prefetch-Strategie kann der Stromverbrauch für den Datentransfer um mehr als 30 % bei verbesserter Systemleistung gesenkt werden. Ein besonders bevorzugter Anwendungsfall dieser prefetch-Strategie liegt im Bereich der mobilen Funktelefonie, insbesondere bei Einsatz des Speichersystems in einem mobilen Endgerät der mobilen Funktelefonie.

Zur einfachen Festlegung des Zeilenabschnitts kann dieser erfindungsgemäß mittels einer vorbestimmten Zeilenabschnittsadresse definiert werden und sämtliche Adressen einer Zeile umfassen, die größer oder gleich als die Zeilenabschnittsadresse sind, wobei die Adresse innerhalb der Zeile, auf die der Prozessor zugreift, mit der Zeilenabschnittsadresse verglichen wird, um anhand dieses Vergleichs festzustellen, ob der Prozessor nun außerhalb oder innerhalb des vorbestimmten Zeilenabschnitts arbeitet, so dass entschieden werden kann, ob ein prefetch initiiert werden kann oder nicht. Die letztendliche Platzierung bzw. Auswahl der Zeilenabschnittsadresse ist im Wesentlichen abhängig von den Leistungsparametern des Prozessors, insbesondere des Prozessortaktes sowie der Datenübertragungsrate aus dem Hauptspeicher wie aber auch der Programmstruktur des Programms, welches der Prozessor abarbeitet, da über dieses vorgegeben ist, ob der Prozessor im Wesentlichen kontinuierlich Adresse für Adresse einer Zeile bzw. zeilenweise die Daten abarbeitet, oder ob während des Abarbeitens des Programms sehr viele Zeilensprünge erfolgen. Grundsätzlich sollte die Zeilenabschnittsadresse so gelegt werden, dass in dem größten Teil der Fälle der prefetch-Vorgang bereits abgeschlossen ist, bevor ein Zugriff auf die Daten vom Prozessor aus erfolgt.

Jede Zeile des Cache-Speichers kann in mehrere Zeilenbereiche bestimmter Länge unterteilt sein, denen jeweils eine eigene Zeilenbereichsadresse zugeordnet ist, wobei die Zeilenbereichsadresse mit der Zeilenabschnittsadresse verglichen wird. Dies trägt der Möglichkeit Rechnung, einen Cache-Speicher in verschiedener Form zu konfigurieren und betrifft im Wesentlichen die Aufteilung jeder Cache-Speicherzeile bzw. des gesamten Cache-Speichers in mehrere Spalten, wobei die Spalten je nach Cache-Speicher-Konfiguration unterschiedlicher Länge sein können. In jeden Zeilenbereich kann eine bestimmte Datenmenge eingeschrieben werden, die anhand der Zeilenbereichsadresse, die im Rahmen der Überprüfung des "Arbeitsortes" des Prozessors innerhalb der Zeile mit der Zeilenabschnittsadresse verglichen wird, auffindbar sind. Dabei kann die Zeilenabschnittsadresse in Form eines Zahlenwertes gegeben sein, wobei anhand der Adresse innerhalb der Zeile oder der Zeilenbereichsadresse, wo der Prozessor gerade zugreift, ein Vergleichszahlenwert ermittelt wird. Gemäß einer zweckmäßigen Weiterbildung des Erfindungsgedankens kann vorgesehen sein, dass mehrere Zeilenabschnitte unterschiedlicher Länge bestimmt sind, wobei der zur Ermittlung eines gegebenenfalls auszuführenden prefetch heranzuziehende Zeilenabschnitt abhängig von dem Programmabschnitt eines vom Prozessor abzuarbeitenden Programms, innerhalb welchem der Prozessor im Zeitpunkt der Ermittlung arbeitet gewählt wird. Der Zeilenabschnitt bzw. die Zeilenabschnittsadresse wird während der Laufzeit eines vom Prozessor abzuarbeitenden Programms vom Programm selbst verändert. Es ist gemäß dieser Erfindungsausgestaltung also eine dynamische Änderung des Zeilenabschnitts realisiert, so dass es möglich ist, für verschiedene Programmteile, die gegebenenfalls unterschiedlich strukturiert sind, separate Zeilenabschnitte zu definieren und für jeden Programmabschnitt die Auslösebedingungen für einen prefetch separat zu definieren. Auf diese Weise kann auf verschiedene Programmstrukturen reagiert werden. Implementiert man also die Entscheidung über die Initiierung eines prefetch-Vorgangs, so dass sie durch Software konfigurierbar ist, ist eine dynamische Veränderung dieses Parameters möglich.

Neben dem Verfahren betrifft die Erfindung ferner ein Speichersystem für Daten, umfassend einen Hauptspeicher und einen in mehreren Zeilen strukturierten Cache-Speicher, in den aus dem Hauptspeicher ausgelesene Daten einschreibbar und bei Bedarf von einem Prozessor auslesbar sind, sowie ein prefetch-Mittel zur Bestimmung, ob ein prefetch auf Daten des Hauptspeichers zur Übertragung an den Cache-Speicher erfolgen soll, sowie zur Durchführung eines prefetch. Dieses Speichersystem zeichnet sich dadurch aus, dass im prefetch-Mittel wenigstens eine auf die Länge einer Zeile des Cache-Speichers bezogene Zeilenabschnittsadresse bestimmt oder bestimmbar ist, mittels welcher ein Zeilenabschnitt innerhalb der Zeile des Cache-Speichers definiert wird, wobei die Mittel zum Vergleichen der Zeilenabschnittsadresse mit einer Adresse innerhalb einer Zeile, auf die der Prozessor zugreift, und zur Bestimmung, ob der Zugriff innerhalb des Zeilenabschnitts erfolgt, sowie zur Durchführung eines prefetch in Abhängigkeit des Vergleichsergebnisses ausgebildet sind.

Jede Zeile des Cache-Speichers kann in mehrere Zeilenbereiche mit jeweils einer separaten, mit der Zeilenabschnittsadresse vergleichbaren Zeilenbereichsadresse unterteilt sein, wobei diese Zeilenbereichsadresse den Zugriffsort des Prozessors angibt und entsprechend mit der Zeilenabschnittsadresse seitens des prefetch-Mittels verglichen wird um zu bestimmen, ob ein prefetch überhaupt möglich wäre.

Als zweckmäßig hat es sich ferner erwiesen, wenn mehrere Zeilenabschnittsadressen zur Bestimmung mehrerer Zeilenabschnitte bestimmt oder bestimmbar sind, wobei die jeweils für den Vergleich heranzuziehende Zeilenabschnittsadresse in Abhängigkeit des Programmabschnitts eines vom Prozessor bearbeiteten Programms, welcher im Zeitpunkt des Zugriffs des Prozessors auf den Cache-Speicher vom Prozessor bearbeitet wird, gewählt wird.

Um zu vermeiden, dass etwaige in einem prefetch aus dem Hauptspeicher geladene Daten direkt in den Cache-Speicher einzuschreiben sind, hat es sich als zweckmäßig erwiesen, wenn der Cache-Speicher einen Registerspeicher umfasst, in den die prefetch-Daten mittels des prefetch-Mittels einschreibbar sind. Werden die im Registerspeicher des Cache-Speichers abgelegten prefetch-Daten benötigt, werden sie von diesem an den Prozessor gegeben und für nachfolgende Zugriffe auch im Cache-Speicher abgelegt.

Bei Verwendung nur eines Registerspeichers kann der Fall auftreten, dass, nachdem prefetch-Daten im Registerspeicher eingeschrieben sind, das Programm jedoch in eine andere Cache-Speicher-Zeile springt, wo ein neuer prefetch nötig wird. Die alten prefetch-Daten im Registerspeicher sind bis dahin noch nicht ausgelesen, können jedoch in Kürze bei einem Rücksprung des Programms wieder gebraucht werden. Da nur ein Registerspeicher vorhanden ist, werden diese aber aufgrund des neuen prefetch überschrieben. Springt das Programm wieder zurück, ist möglicherweise ein erneuter prefetch erforderlich. Um hier Abhilfe zu schaffen hat es sich als zweckmäßig erwiesen, wenn mehrere Registerspeicher vorgesehen sind, in die jeweils die prefetch-Daten verschiedener prefetch-Vorgänge einschreibbar sind. Dabei sollten neu einzuschreibende prefetch-Daten in den Registerspeicher eingeschrieben werden, in dem die jüngsten prefetch-Daten unter Überschreiben der ältesten vorhanden sind.

Weitere Vorteile, Merkmale und Einzelheiten der Erfindung ergeben sich aus den im folgenden beschriebenen Ausführungsbeispielen sowie anhand der Zeichnungen. Dabei zeigen:
Fig. 1 eine Prinzipskizze eines Speichersystems mit zugeordnetem Prozessor,
Fig. 2 eine Prinzipskizze der Struktur eines Cache-Speichers einer ersten Ausführungsform zur Darstellung der Vorgänge zur Initiierung eines prefetch, und
Fig. 3 eine Cache-Speicher-Struktur entsprechend Fig. 1 mit mehreren, dem Cache-Speicher zugeordneten Registerspeichern.

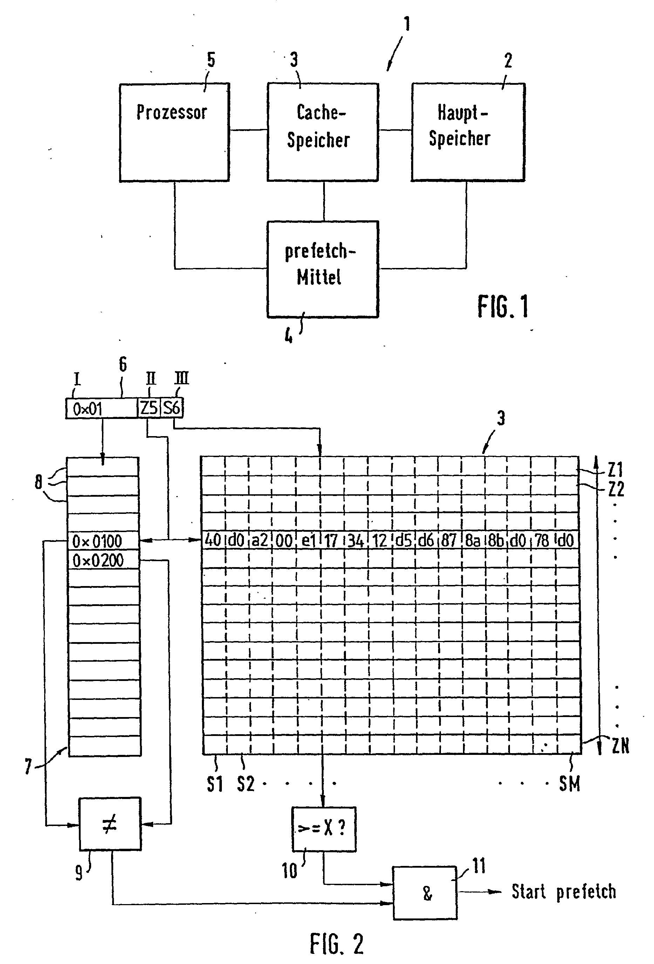

Fig. 1 zeigt ein erfindungsgemäßes Speichersystem 1, umfassend einen Hauptspeicher 2 großen Speichervolumens, der jedoch eine verhältnismäßig langsame Arbeitsgeschwindigkeit aufweist. Diesem zugeordnet ist ein Cache-Speicher 3, bei dem es sich um einen wesentlich schneller arbeitenden Pufferspeicher handelt. Mit dem Cache-Speicher 3 und dem Hauptspeicher 2 verbunden bzw. diesem zugeordnet ist ein prefetch-Mittel 4, mittels welchem einerseits bestimmt wird, ob überhaupt ein prefetch durchzuführen ist, und andererseits die Durchführung des prefetch erfolgt. Dem Speichersystem 1 zugeordnet ist ferner ein Prozessor 5, der im gezeigten Beispiel mit dem Cache-Speicher 3 und dem prefetch-Mittel 4 in Kommunikationsverbindung steht. Der Prozessor 5, der ein Programm abarbeitet und auf entsprechende Daten des Speichersystems 1 zugreifen muss, greift primär auf den sehr schnell arbeitenden Cache-Speicher 3 zu, in dem im Voraus ein Großteil der im Hauptspeicher 2 abgelegten Daten eingeschrieben wurde. Durch Übertragen der Daten in den Speicher 3 wird sichergestellt, dass diese dem Prozessor im Bedarfsfall in hinreichender Geschwindigkeit zur Verfügung stehen. Sollte jedoch eine bestimmte Adresszeile, auf die der Prozessor 5 zugreifen möchte, im Cache-Speicher 3 nicht vorhanden sein, so wird diese aus dem Hauptspeicher 2 in den Cache-Speicher 3 geladen und von dort an den Prozessor 5 weitergegeben.

Die in Fig. 1 gezeigte Gesamtkonfiguration, die bevorzugt auf einem gemeinsamen Chip vorgesehen ist, was vorteilhaft hinsichtlich der Datenübertragung sowie des Stromverbrauchs ist, ist wie beschrieben auch zur Durchführung eines prefetch ausgebildet. Im Rahmen dessen wird bei einem Zugriff des Prozessors auf eine Cache-Speicherzeile und dort auf eine bestimmte Adresse in der Zeile überprüft, ob eine nachfolgende Zeile, die sequentielle Daten beinhaltet, ebenfalls bereits im Cache-Speicher 3 vorhanden ist. Falls dem nicht so ist, wird über das prefetch-Mittel 4 die entsprechende fehlende Zeile aus dem Hauptspeicher 2 in den Cache-Speicher 3 übertragen bzw. ein solcher Übertragungsvorgang initiiert.

Fig. 2 zeigt in Form einer Prinzipskizze eine mögliche Cache-Speicher-Konfiguration und dient zur Erläuterung der Vorgänge zur Initiierung eines möglichen prefetch. Der Prozessor 5 liefert eine Adresse 6 an den Cache-Speicher, die angibt, welche Daten der Prozessor benötigt. Die Adresse 6 besteht aus insgesamt drei Adressabschnitten I, II, III. Der erste Adressabschnitt I gibt die Seitenadresse des Hauptspeichers an, zu welcher die Daten einer Cache-Speicherzeile zugeordnet sind. Der Cache-Speicher 3 besitzt ein entsprechendes Cache-Adress-directory 7, in dem mit den Hauptspeicher-Seitenadressen korrespondierende Seitenadressen 8 abgelegt sind. Innerhalb des Cache-Adressen-directories 7 wird nun mit dem Adressabschnitt II adressiert und der Adressabschnitt I mit dem Inhalt des Cache-Adressen-directories verglichen. In diesem Fall lautet die Seitenadresse "0x01".

Der Adressabschnitt II, der eine Zeilenadresse darstellt, gibt an, in welcher Zeile des Cache-Speichers 3 die unter dem Adressabschnitt I abgelegten Daten vorhanden sind. Diese Information stellt also das Bindeglied zwischen dem Cache-Adress-directory und dem Cache-Speicher dar. Im gezeigten Beispiel lautet diese Adressinformation "Z5". Schließlich wird mit der Information im Adressabschnitt III die Adresse der jeweiligen Daten, die innerhalb der Zeile ausgelesen werden sollen, angegeben. Wie Fig. 2 zeigt, ist der Cache-Speicher 3 in eine Vielzahl von Zeilen Z1, Z2, ..., ZN wie auch eine Vielzahl von Spalten S1, S2, ..., SM unterteilt. Die Information im Adressteil III lautet "S6" und bestimmt also als auszulesende Daten diejenigen in Spalte S6.

Im gezeigten Beispiel erfolgt also der Zugriff auf Daten, die sich im Cache-Speicher 3 in Zeile Z5 und dort im Spaltenblock S6 befinden. Die auszulesende Information lautet im gezeigten Beispiel "17".

Erhält nun der Cache-Speicher die Adresse 6 vom Prozessor, wird automatisch überprüft, ob auch die nachfolgenden Daten, die im Hauptspeicher in der entsprechend folgenden Zeile abgelegt sind, bereits im Cache-Speicher 3 vorhanden sind. Es wird also überprüft, ob die der Adresse "0x01/Z5" nachfolgende Datenzeile, nämlich die Zeile "0x01/Z6" ebenfalls bereits im Cache-Speicher 3 vorhanden ist. Dies erfolgt durch Überprüfung des Cache-directories 7 im Schritt 9. Wird das Vorhandensein der Zeile festgestellt, stehen diese Daten zur Verfügung, fehlt diese Zeile, ist möglicherweise ein prefetch zum Laden dieser Zeile aus dem Hauptspeicher erforderlich.

Um einen prefetch-Vorgang nun tatsächlich zu initiieren, muss neben dem Fehlen der gesuchten Zeile noch eine weitere Bedingung erfüllt sein. Diese besteht darin, dass der Prozessor im Cache-Speicher 3 auf eine Adresse zugreifen muss, die innerhalb eines vorbestimmten Zeilenabschnitts liegt. Dieser Zeilenabschnitt wird im gezeigten Beispiel anhand der Zeilenabschnittsadresse "X" bestimmt. Der Zeilenabschnitt, der hierdurch definiert wird, umfasst sämtliche Adressen einer der Zeilen Z1, Z2 ... ZN, die gleich oder größer als die Zeilenabschnittsadresse sind. Würde beispielsweise die Zeilenabschnittsadresse X = S5 lauten, so würde der Zeilenabschnitt sämtliche Spalten S5, S6 ... SM umfassen. Liegt die momentan vom Prozessor abgerufene Adresse S6 außerhalb dieses Zeilenabschnitts, erfolgt kein prefetch. Liegt sie innerhalb, wird ein prefetch durchgeführt. Dies wird im Schritt 10 überprüft. Sind nun die Bedingungen der Schritte 9 und 10 beide erfüllt, was im Schritt 11 überprüft wird, wird ein prefetch durchgeführt, die entsprechenden Daten werden aus dem Hauptspeicher ausgelesen und an den Cache-Speicher 3 übertragen. Die Schritte 9, 10 und 11 werden im prefetch-Mittel 4 durchgeführt, wozu dieses über eine entsprechende Logik und Software verfügt. Es bleibt darauf hinzuweisen, dass der Zeilenabschnittswert X letztlich beliebig gesetzt werden kann, das heißt, der jeweilige Zeilenabschnitt kann in seiner Größe beliebig eingestellt werden. Soll beispielsweise, wie bisher im Stand der Technik, bei jedem Prozessorzugriff die Möglichkeit eines prefetch gegeben sein, wird der Zeilenabschnittswert X auf S1 gesetzt, der Zeilenabschnitt umfasst dann sämtliche Spaltenabschnitte. Soll zu keinem Zeitpunkt ein prefetch durchgeführt werden, wird der Zeilenabschnittswert X beispielsweise auf 0 gesetzt.

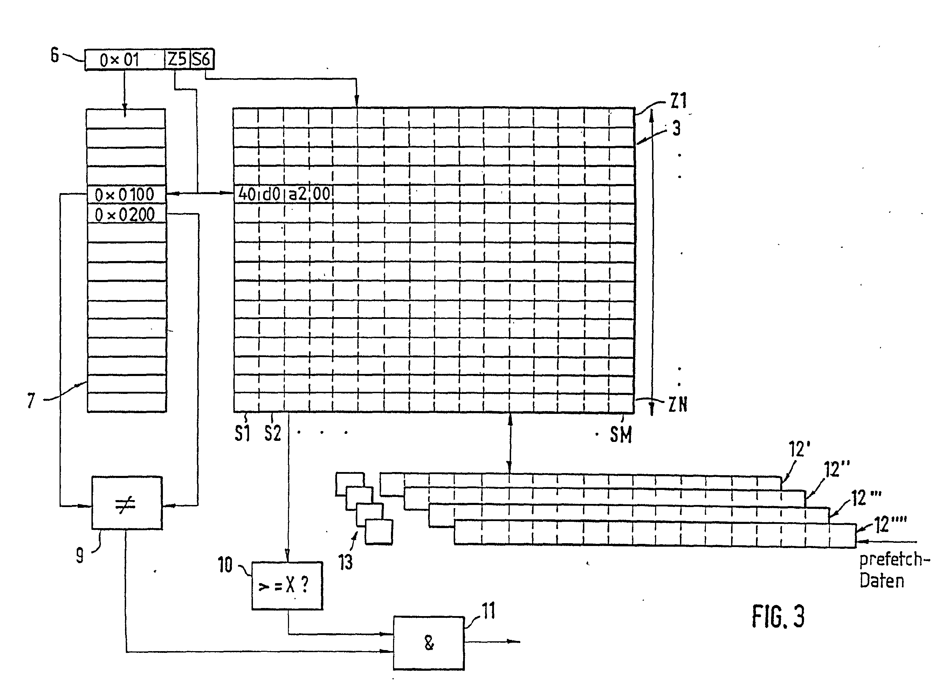

Fig. 3 zeigt schließlich die Konfiguration eines Cache-Speichers entsprechend Fig. 2, jedoch sind hier dem Cache-Speicher 3 mehrere Registerspeicher 12', 12", 12"', 12'''' zugeordnet, in welche im Rahmen eines prefetch aus dem Hauptspeicher geladene Daten eingeschrieben werden. Den Registerspeichern 12', ... 12'''' ist ein entsprechendes Cache-Register-Adress-directory 13 zugeordnet, in das dann die jeweiligen, zu den Hauptspeicheradressen korrespondierenden Adressen eingeschrieben werden. Durch Verwendung mehrerer Registerspeicher ist es möglich, prefetch-Daten für eine gewisse Zeit zu halten, ohne dass diese bei einem neuen prefetch sofort überschrieben werden, wie dies der Fall wäre, wenn nur ein Registerspeicher vorhanden wäre. Die Einschreibstrategie kann derart sein, dass bei neuen prefetch-Daten stets der Registerspeicher überschrieben wird, der die ältesten prefetch-Daten enthält. Hierdurch wird dem Umstand Rechnung getragen, dass bei der Bearbeitung von Programmen, bei denen sehr häufig Zeilensprünge stattfinden, nicht ausgelesene prefetch-Daten, die zwar eingelesen, jedoch aufgrund des Zeilensprungs nicht benötigt wurden, für eine gewisse Zeit bis zum Überschreiben gehalten werden, da die Möglichkeit besteht, dass das Programm wieder an die ursprüngliche Zeile zurückspringt und die Daten doch noch benötigt werden. Ein Überschreiben durch einen nachfolgenden prefetch ist ausgeschlossen, da diese Daten in einen anderen Registerspeicher geschrieben werden würden. Abschließend ist darauf hinzuweisen, dass die gezeigten Cache-Speicher-Konfigurationen lediglich beispielhaft sind. Der Cache-Speicher kann beliebig strukturiert sein. Beispielsweise kann der Speicher als Directmapping-Cache-Speicher oder aber als Two-Way-Set-Associative-Cache-Speicher ausgeführt sein.

## Patentansprüche

1. Verfahren zum Betrieb eines Speichersystems (1) umfassend einen Hauptspeicher (2) und einen diesem zugeordneten, in adressbezogene Zeilen strukturierten Cache-Speicher (3), in den Daten aus dem Hauptspeicher (2) eingeladen und bei Bedarf von einem Prozessor (5) ausgelesen werden können, das Verfahren umfassend:
- den Zugriff des Prozessors auf Daten einer bestimmten Adresse im Cache-Speicher (3), unter welcher bestimmte Daten einer korrespondierenden Adresse aus dem Hauptspeicher (2) abgelegt sind, und
- während dieses Zugriffs überprüfen, ob unter einer der bestimmten Adresse nächstfolgenden Adresse im Cache-Speicher sequentielle Daten abgelegt sind,
- wenn die sequentiellen Daten nicht im Cache-Speicher (3) abgelegt sind, die sequentiellen Daten aus dem Hauptspeicher im Rahmen eines prefetch in den Cache-Speicher (3) laden (11),
**dadurch gekennzeichnet, dass** die Durchführung des prefetch ferner umfasst:
eine Entscheidung treffen (10), dass ein prefetch nur dann durchgeführt wird, wenn der Prozessor (5) auf einen Cache-Zeilenabschnitt oder auf einen innerhalb einer Cache-Zeile liegenden, vorbestimmten Cache-Zeilenabschnitt zugreift, wobei der vorbestimmte Cache-Zeilenabschnitt oder der Cache-Zeilenabschnitt auf Grundlage einer Zeilenabschnitt-Adresse (X) bestimmt wird;
den vorbestimmten Cache-Zeilenabschnitt oder Cache-Zeilenabschnitt dynamisch einstellen, indem die Zeilenabschnitts-Adresse (X) auf Grundlage eines momentanen Operationsstatus des Prozessors (5) gesetzt wird.

2. Verfahren nach Anspruch 1,
**dadurch gekennzeichnet,**
**dass** der Cache-Zeilenabschnitt mittels einer vorbestimmten Cache-Zeilenabschnittsadresse definiert ist und sämtliche Adressen einer Zeile umfasst, die grösser oder gleich als die Cache-Zeilenabschnittsadresse sind, wobei die Adresse innerhalb der Zeile, auf die der Prozessor (5) zugreift, mit der Cache-Zeilenabschnittsadresse verglichen wird.

3. Verfahren nach Anspruch 2,
**dadurch gekennzeichnet,**
**dass** jede Zeile in mehrere Zeilenbereiche bestimmter Länge unterteilt ist, denen jeweils eine eigene Zeilenbereichsadresse zugeordnet ist, wobei die Zeilenbereichsadresse mit der Cache-Zeilenabschnittsadresse verglichen wird.

4. Verfahren nach Anspruch 2 oder 3,
**dadurch gekennzeichnet,**
**dass** die Cache-Zeilenabschnittsadresse in Form eines Zahlenwerts gegeben ist, wobei anhand der Adresse innerhalb der Zeile oder der Zeilenbereichsadresse ein Vergleichszahlenwert ermittelt wird.

5. Verfahren nach einem der vorangehenden Ansprüche,
**dadurch gekennzeichnet,**
**dass** mehrere Zeilenabschnitte unterschiedlicher Länge bestimmt sind, wobei der zur Ermittlung eines gegebenenfalls auszuführenden prefetch heranzuziehende Zeilenabschnitt abhängig von dem Programmabschnitt eines vom Prozessor (5) abzuarbeitenden Programms, innerhalb welchem der Prozessor (5) im Zeitpunkt der Ermittlung arbeitet gewählt wird.

6. Speichersystem (1) für Daten, umfassend:
- einen Hauptspeicher (2);
- einen in mehreren Zeilen strukturierten Cache-Speicher (3),
- ein Prozessor (5) konfiguriert um, wenn erforderlich, auf Daten einer bestimmten Adresse des Cache-Speichers (3) zuzugreifen, unter welcher Adresse bestimmte Daten einer korrespondierenden Adresse vom Hauptspeicher (2) abgelegt wurden, und
- prefetch-Mittel (4) ausgelegt, um während des Zugriffs auf die Daten der bestimmten Adresse des Cache-Speichers (3) zu testen ob sequentielle Daten unter einer der bestimmten Adresse nächstfolgenden Adresse im Cache-Speicher (3) abgelegt sind, wobei diese prefetch-Mittel (4) derart ausgelegt sind, dass sie, wenn die sequentiellen Daten nicht im Cache-Speicher (3) abgelegt sind, die sequentiellen Daten aus dem Hauptspeicher im Rahmen eines prefetch in den Cache-Speicher (3) laden (11),
**dadurch gekennzeichnet, dass**
diese prefetch-Mittel (4) derart ausgelegt sind, eine Entscheidung zu treffen (10), dass ein prefetch nur dann durchgeführt wird, wenn der Prozessor (5) auf einen Cache-Zeilenabschnitt oder auf einen innerhalb einer Cache-Zeile liegenden, vorbestimmten Cache-Zeilenabschnitt zugreift, wobei der vorbestimmte Cache-Zeilenabschnitt oder der Cache-Zeilenabschnitt auf Grundlage einer Zeilenabschnitt-Adresse (X) bestimmt wird,
diese prefetch-Mittel (4) weiterhin ausgelegt sind, den vorbestimmten Cache-Zeilenabschnitt oder Cache-Zeilenabschnitt dynamisch einzustellen, indem die Zeilenabschnitts-Adresse (X) auf Grundlage eines momentanen Operationsstatus des Prozessors (5) gesetzt wird.

7. Speichersystem nach Anspruch 6,
**dadurch gekennzeichnet,**
**dass** jede Zeile (Z1, ..., ZN)
des Cache-Speichers (3) in mehrere Zeilenbereiche (S1, .., SM) mit jeweils einer separaten, mit der Zeilenabschnittsadresse vergleichbaren Zeilenbereichsadiessc unterteilt ist.

8. Speichersystem nach einem der Ansprüche 6 oder 7,
**dadurch gekennzeichnet,**
**dass** mehrere Zeilenabschnittsadressen zur Bestimmung mehrere Zeilenabschnitte bestimmt oder bestimmbar ist, wobei die jeweils für den Vergleich heranzuziehende Zeilenabschnittsadresse in Abhängigkeit des Programmabschnitts eines vom Prozessor (5) bearbeiteten Programms, welcher im Zeitpunkt des Zugriffs des Prozessors (5) auf den Cache-Speicher (3) vom Prozessor (5) bearbeitet wird, gewählt wird.

9. Speichersystem nach einem der Ansprüche 6 bis 8,
**dadurch gekennzeichnet,**
**dass** der Cache-Speicher (3) einen Registerspeicher (12', 12", 12"', 12"") umfasst, in den die prefetch-Daten mittels des prefetch-Mittels (4) einschreibbar sind.

10. Speichersystem nach Anspruch 9,
**dadurch gekennzeichnet,**
**dass** mehrere Registerspeicher (12', 12", 12"', 12"") vorgesehen sind, in die jeweils die prefetch-Daten verschiedener prefetch-Vorgänge einschreibbar sind.

11. Speichersystem nach Anspruch 10,
**dadurch gekennzeichnet,**
**dass** neu einzuschreibende prefetch-Daten in den Registerspeicher (12', 12", 12"', 12'''') einschreibbar sind, in dem die jüngsten prefetch-Daten unter Überschreiben der ältesten vorhanden sind.

## Claims

1. Method for operating a memory system (1) comprising a main memory (2) having a cache memory (3) assigned to it that is structured in address-based lines and in which data can be loaded from the main memory (2) and, if needed, read out by a processor (5), the method comprising:
- the processor accessing data of a specific address in the cache memory (3) where specific data of a corresponding address from the main memory (2) is filed, and
- is checking during this access if sequential data is filed in an address of the cache memory following the specific address,
- if the sequential data is not filed in the cache memory (3), the sequential data from the main memory is loaded (11) into the cache memory (3) as part of a prefetch,
**characterized in that** the implementation of the prefetch further comprises:
making a decision (10) that a prefetch will only be implemented when the processor (5) accesses a cache line section or a predetermined cache line section located within a cache line, wherein the predetermined cache line section or the cache line section is determined based on a line section address (X);
dynamically adjusting the predetermined cache line section or cache line section by setting the line section address (X) based on a current status of operation of the processor (5).

2. Method according to claim 1,
**characterized in that**
the cache line section is defined by means of a predetermined cache line section address and comprises all the addresses of a line that are larger than or equal to the cache line section address, wherein the address within the line, that the processor (5) accesses, is compared with the cache line section address.

3. Method according to claim 2,
**characterized in that**
each line is divided into several line areas having a specific length to each of which is assigned its own line section address, wherein the line section address is compared with the cache line section address.

4. Method according to claim 2 or 3,
**characterized in that**
the cache line section address is provided in the form of a numerical value, wherein a comparative numerical value is determined with the help of the address within the line or the line section address.

5. Method according to one of the previous claims,
**characterized in that**
several line sections of different lengths are determined, wherein the line section, that is used to determine if the implementation of a prefetch is indicated, is selected based on the program section of a program, in which the processor (5) is working at the time of the determination, to be processed by the processor (5).

6. Memory system (1) for data, comprising:
- a main memory (2);
- a cache memory (3) structured in several lines,
- a processor (5) configured to access, if necessary, data of a specific address of the cache memory (3), at which address specific data of a corresponding address was filed by the main memory (2), and
- prefetch means (4) designed for testing during the accessing of the data of the specific address of the cache memory (3) if sequential data is filed in an address in the cache memory (3) following the specific address, wherein these prefetch means (4) are designed in such a way that if the sequential data is not in the cache memory (3) they will load (11) the sequential data from the main memory into the cache memory (3) as part of a prefetch,
**characterized in that**
these prefetch means (4) are designed in such a way to make a decision (10) that a prefetch will only be executed when the processor (5) accesses a cache line section or a predetermined cache line section located within a cache line, wherein the predetermined cache line section or the cache line section is determined based on a line section address (X),
these prefetch means (4) are furthermore designed to dynamically adjust the predetermined cache line section or cache line section, by setting the line section address (X) based on a current status of operation of the processor (5).

7. Memory system according to claim 6,
**characterized in that**
each line (Z1, ..., ZN)
of the cache memory (3) is divided into several line areas (S1, ..., SM) each having a separate line area address comparable with the line section address.

8. Memory system according to one of the claims 6 or 7,
**characterized in that**
several line section addresses are determined or can be determined for determining several line sections, wherein the line section address respectively used for the comparison is selected based on the program section of a program, which is being processed by the processor (5) at the time when the processor (5) is accessing the cache memory (3),

9. Memory system according to one of the claims 6 to 8,
**characterized in that**
the cache memory (3) comprises a register memory (12', 12", 12"', 12"") in which the prefetch data can be written by means of the prefetch means (4).

10. Memory system according to claim 9,
**characterized in that**
several register memories (12', 12", 12"', 12"") are provided in which can be written respectively the prefetch data of different prefetch processes.

11. Memory system according to claim 10,
**characterized in that**
prefetch data to be written for the first time can be written into the register memory (12', 12", 12"', 12"") by the most recent prefetch data being available by overwriting the oldest ones.

## Revendications

1. Procédé permettant de faire fonctionner un système de mémoire (1) comprenant une mémoire centrale (2) et une mémoire cache (3) associée à celle-ci, structurée en lignes relatives à l'adresse, et dans laquelle les données provenant de la mémoire centrale (2) peuvent être chargées et, si nécessaire, lues par un processeur (5), le procédé comprenant les étapes suivantes consistant à :
- donner accès au processeur aux données d'une adresse définie dans la mémoire cache (3), adresse sous laquelle des données définies d'une adresse correspondante provenant de la mémoire centrale (2) sont mises en mémoire, et
- pendant cet accès, contrôler si, sous une adresse succédant à l'adresse définie, des données séquentielles sont mises dans la mémoire cache,
- lorsque les données séquentielles ne sont pas mises en mémoire dans la mémoire cache (3), charger (11) dans la mémoire cache (3) les données séquentielles provenant de la mémoire centrale dans le cadre d'une fonction prefetch,
**caractérisé en ce que** la mise en oeuvre de la fonction prefetch consiste en outre :
à décider (10) qu'une fonction prefetch ne peut être mise en oeuvre que si le processeur (5) accède à une partie de ligne de la mémoire cache ou à une partie prédéfinie de ligne de la mémoire cache située à l'intérieur d'une ligne de la mémoire cache, la partie prédéfinie de ligne de la mémoire cache ou la partie de ligne de la mémoire cache étant définie sur la base d'une adresse de partie de ligne (X) ;
à régler de manière dynamique la partie prédéfinie de ligne de la mémoire cache ou la partie de ligne de la mémoire cache, par le fait que l'adresse de partie de ligne (X) est enregistrée sur la base d'un statut de fonctionnement momentané du processeur (5).

2. Procédé selon la revendication 1,
**caractérisé en ce que**
la partie de ligne de la mémoire cache est définie au moyen d'une adresse de partie de ligne de la mémoire cache prédéfinie et comprend toutes les adresses d'une ligne qui sont supérieures ou égales à l'adresse de partie de ligne de la mémoire cache, l'adresse à l'intérieur de la ligne à laquelle le processeur (5) accède étant comparée à l'adresse de la partie de ligne de la mémoire cache.

3. Procédé selon la revendication 2,
**caractérisé en ce que**
chaque ligne est divisée en plusieurs zones d'une longueur définie auxquelles respectivement une adresse de zone de ligne propre est associée, l'adresse de zone de ligne étant comparée à l'adresse de partie de ligne de la mémoire cache.

4. Procédé selon la revendication 2 ou 3,
**caractérisé en ce que**
l'adresse de partie de ligne de la mémoire cache est fournie sous la forme d'une valeur numérique, une valeur numérique comparative étant déterminée sur la base de l'adresse à l'intérieur de la ligne ou de l'adresse de zone de ligne.

5. Procédé selon l'une quelconque des revendications précédentes,
**caractérisé en ce que**
plusieurs parties de ligne de différentes longueurs sont définies, la partie de ligne à utiliser pour déterminer une fonction prefetch à mettre éventuellement en oeuvre étant sélectionnée en fonction de la partie d'un programme destiné à être exécuté par le processeur (5) au cours de laquelle le processeur (5) travaille au moment de la détermination.

6. Système de mémoire (1) pour données, comprenant :
- une mémoire centrale (2) ;
- une mémoire cache (3) structurée en plusieurs lignes,
- un processeur (5) configuré, si nécessaire, pour accéder aux données d'une adresse définie de la mémoire cache (3), adresse sous laquelle des données définies d'une adresse correspondante ont été mises en mémoire par la mémoire centrale (2), et
- des moyens prefetch (4) conçus pour tester, pendant l'accès aux données de l'adresse définie de la mémoire cache (3), si les données séquentielles sont mises en mémoire dans la mémoire cache (3) sous une adresse succédant à l'adresse définie, ces moyens prefetch (4) étant conçus de telle manière que, lorsque les données séquentielles ne sont pas mises en mémoire dans la mémoire cache (3), ils chargent (11) dans la mémoire cache (3) les données séquentielles provenant de la mémoire centrale dans le cadre d'une fonction prefetch,
**caractérisé en ce que**
ces moyens prefetch (4) sont conçus pour décider (10) qu'une fonction prefetch ne peut être mise en oeuvre que si le processeur (5) accède à une partie de ligne de la mémoire cache ou à une partie prédéfinie de ligne de la mémoire cache située à l'intérieur d'une ligne de la mémoire cache, la partie prédéfinie de ligne de la mémoire cache ou la partie des lignes de la mémoire cache étant définie sur la base d'une adresse de la partie de ligne (X),
des moyens prefetch (4) étant conçus pour régler de manière dynamique la partie prédéfinie de ligne de la mémoire cache ou la partie de ligne de la mémoire cache, par le fait que l'adresse de partie de ligne (X) est enregistrée sur la base d'un statut de fonctionnement momentané du processeur (5).

7. Système de mémoire selon la revendication 6,
**caractérisé en ce que**
chaque ligne (Z1,..., ZN) de la mémoire cache (3) est divisée en plusieurs zones de ligne (S1, ..., SM) pourvues respectivement d'une adresse de zone de ligne séparée, pouvant être comparée à l'adresse de partie de ligne.

8. Système de mémoire selon l'une quelconque des revendications 6 ou 7,
**caractérisé en ce que**
plusieurs adresses de partie de ligne sont définies ou peuvent être définies pour définir plusieurs parties de ligne, l'adresse de partie de ligne destinée à être utilisée respectivement pour la comparaison étant sélectionnée en fonction de la partie d'un programme exécuté par le processeur (5), laquelle est exécutée au moment de l'accès du processeur (5) à la mémoire cache (3) par le processeur (5).

9. Système de mémoire selon l'une quelconque des revendications 6 à 8,
**caractérisé en ce que**
la mémoire cache (3) comprend une mémoire de registre (12', 12", 12"', 12"") dans laquelle les données prefetch peuvent être enregistrées à l'aide du moyen prefetch (4).

10. Système de mémoire selon la revendication 9,
**caractérisé en ce que**
plusieurs mémoires de registre (12', 12", 12"', 12"") sont prévues, dans lesquelles respectivement les données prefetch de différentes procédures prefetch peuvent être enregistrées.

11. Système de mémoire selon la revendication 10,
**caractérisé en ce que**
des données prefetch à réenregistrer peuvent être enregistrées dans la mémoire de registre (12', 12", 12"', 12""), dans laquelle les données prefetch les plus récentes écrasent les données prefetch les plus anciennes.
